# EUROPEAN PATENT APPLICATION

(11) **EP 3 777 549 A1**
(43) Date of publication of application: **17.02.2021**
(21) Application number: 19192139.4
(22) Date of filing: 16.08.2019
(51) Int. Cl.: A23G 1/00, A23G 1/22, A23G 1/50, A23G 3/20, A23G 3/50, A23P 30/10

(54) **FOOD PRODUCT AND METHOD OF PREPARATION**

(71) Applicant: ETH Zurich, 8092 Zürich (CH); FHNW University of Applied Sciences and Arts Northwestern Switzerland, 5210 Windisch (CH)
(72) Inventor: Studart, André R.,, 8044 Zürich (CH); Spolenak, Ralph,, 8008 Zürich (CH); Rühs, Patrick A.,, 8050 Zürich (CH); Masania, Kunal,, 2517 SC Den Haag (NL); Galinski, Henning,, 8706 Meilen (CH); Jeoffroy, Etienne,, 8049 Zürich (CH); Kristiansen, Per M.,, 8708 Männedorf (CH); Zingg, Anita,, 8954 Geroldswil (CH); Werder, Jerome,, 5024 Küttigen (CH)
(74) Representative: Rey, Antje Gabriele

(57) **Abstract**

Food product and method for manufacturing the food product. The food product comprises a surface (1), wherein at least a section of the surface (1) is built by an array of periodic structures (2) that are adapted to diffract an incident light beam into beam components of different wavelengths.

## Description

### Technical Field

The present invention relates to a food product, a method for manufacturing a food product and a mold for manufacturing the food product.

### Background Art

Decoration for food products is very popular. Such decoration might be done by coating the respective food product with artificial food dyes or by layering with different food products of different colors.

Anyway, such known methods of coloring or layering affect the original food product and might even alter its original taste and properties.

### Disclosure of the Invention

The problem to be solved by the present invention is therefore to provide a food product and a method for manufacturing such a food product comprising a decoration that does neither affect the original product properties nor alter its original taste.

This problem is solved by the subjects of the independent claims. Accordingly, a first aspect of the invention concerns a food product comprising a surface wherein at least a section of this surface is built by an array of periodic structures. These structures are adapted to diffract an incident light beam into beam components of the incident light beam with different wavelengths.

In particular, the term "structures" might refer to surface topographies.

In particular, the incident light beam is polychromatic light.

In particular, the adaption of the periodic structures to diffract the incident light beam refers to a structure that can separate different wavelengths of light from the incident light beam. The structure affects the amplitude and/or phase of the incident light beam, causing interference in the output wave.

In particular, this means that the incident light beam is dispersed by the periodic structure, so that each wavelength of the incident beam is reflected from the grating at a slightly different angle. The dispersion and efficiency of the structures is dependent on the distance between the individual structures and the shape of the structures.

In particular, the periodic structures diffract the incident beam into different diffraction orders.

Advantageously, the periodic structures are directly formed from the substrate. Therefore, the structures are built from the same material as the substrate. Therefore, the periodic structures have the same material properties as the substrate.

Being arranged in a periodic pattern means that the dimensions of the individual structures as well as the distances between the individual structures repeat.

The term food product refers in particular to any substance that can be metabolized by a living being to give energy and build tissue.

Advantageously, the array of periodic structures thereby refers to an array of structures that are arranged within a repeating distance or with a repeating pattern. The respective array has dimensions that allow diffracting an incident light beam, preferably daylight, into beam components of different wavelengths, essentially into beams with wavelengths of different rainbow colours. In particular, the incident beam has a wavelength within the visible range of 380 to 740 nanometres.

Advantageously, all individual structures of an array of periodic structures have the same dimensions and/or shape.

By providing an array of periodic structures that are adapted to diffract an incident light beam into beams with different wavelengths, the surface of the food product appears coloured without actually applying any specific layers or modifying the surface and without modifying the taste of the food product.

An advantageous food product is a food product selected from the group consisting of a chocolate bar, a chocolate layer, or a chocolate coating. In the following, all food products of the group are just generally named as chocolate or chocolates.

Generally speaking and according to the international food standard for chocolate and chocolate products of the United Nations that shall be included here by reference (FAO, Codex Alimentarius, Codex Stan 87 - 1981), chocolate and chocolate products shall be prepared from cocoa and cocoa materials with sugars. They may contain sweeteners, milk products, flavouring substances and other food ingredients. Generally speaking, chocolate is the generic name for homogenous products obtained by a manufacturing process from cocoa materials which may be combined with milk products, sugars, and/or sweeteners. In particular, generally speaking, chocolate can be described as a homogenous mass of its ingredients.

For an advantageous food product of the invention, the array of periodic structures is built as a grating pattern, in particular as a reflecting grating pattern. A grating pattern is an optical component with a periodic structure that splits and diffracts light into beam components travelling into different directions. The directions of the diffracted beams depend on the shape, the spacing of the grating and/or the wavelength of the incident light.

A very advantageous food product comprises a grating pattern that is a blaze grating pattern. A blaze grating is a special type of diffraction grating. It is optimized to achieve a maximum grating efficiency in a given diffraction order. In particular, the blaze grating might be optimized for a specific blaze wavelength. Advantageously, the blaze grating of the food product is optimized for a blaze wavelength in the range of visible light, in particular within a range of 380 to 780 nm.

Advantageously, the grating pattern comprises grating lines, wherein the cross section of the grating lines, particularly extending rectangularly in respect to the extension of the lines, have the shape of triangles, pyramids, saw teeth, tetragons, or sinusoidal curves. The variation of the shape of the cross section of the grating lines might lead to variations in the diffraction of the light and therefore to variations in the appearance that can thereby be tuned accordingly.

A typical blaze grating comprises an array of individual grating lines having an essentially triangular cross section in a direction rectangular to the extension of the lines. A typical cross section of an array of such grating lines of a blaze grating forms an essentially saw-tooth-shaped cross section.

An advantageous food product comprises a blaze grating with grating elements that have a line spacing of 150 ≤ grooves/mm ≤ 1200 and a blaze angle 4 ≤ θ ≤ 37, in particular 8 ≤ θ ≤ 37, very particular 4 ≤ θ ≤ 10. The line spacing refers to the number of grooves that are counted within a distance "a" per millimetre. The line spacing therefore could also be expressed as comprising grating elements that are aligned in an interval "i" of 0.8µm ≤ i ≤ 6 µm. The blaze angle refers to the angle of one triangular section that forms between the surface of the respective grating element and a horizontal line.

In particular, the term "line spacing" refers to the repeated periodic interval of the grating structure, defining the distance between the individual elements.

A further advantageous food product can comprise an array of periodic structures that is formed from elements having the form of a cone, a pyramid or a tetragon. Such structures are not formed as lines but as individual elements. The individual elements are arranged in a pattern with regular distances from each other. Advantageously, each individual element has the same distance to each other element. These arrays, even though they are not formed as lines, have a diffracting effect such that the incident light beam is diffracted into beam components of different wavelengths when hitting the structures. Also here, the technical effect is to tune the diffraction of the incident beam.

In a further advantageous embodiment, the elements having the form of cones, pyramids or tetragons can be mixed to an array of periodic structures.

An advantageous food product, in particular a chocolate product, according to the invention comprises a surface material with a refractive index "n" of 1.2 ≤ n ≤ 1.6. A further food product according to the invention might have a refractive index of 1.0 ≤ n ≤ 2.0. The refractive index describes how light propagates through an optical medium with n = c/v, wherein c is the speed of light in vacuum and v is the phase velocity of light in the respective medium.

A further advantageous embodiment of the invention relates to a food product, wherein the surface material has an essentially crystalline structure with crystals having a diameter d of 0.1µm ≤ d ≤ 5µm.

The crystal size is measured as an average diameter of the respective crystal.

For an advantageous food product comprising chocolate, the cocoa butter, the fat in chocolate, can crystallize in six different forms (all polymorph). Advantageously, the hardened chocolate forms a so-called beta crystal structure.

The crystallization of the cocoa butter leads to the essentially crystalline structure and crystalline properties of the chocolate. An advantageous food product comprising chocolate has therefore an essentially crystalline surface. Such essentially crystalline surface enables in particular the formation of said array of periodic structures that are adapted to diffract light on the product surface.

Advantageously, the food product according to the invention has a surface material having a melting point of T ≤ 50°C. Such low melting temperature might in particular enable the fabrication of the array of periodic structures on the material surface.

An advantageous food product does not comprise any particular additives on the surface. In particular, for a food product comprising a chocolate surface, the surface is not treated with any additives. The array of periodic structures is formed directly onto the chocolate surface without any additional layer. Advantageously, the array of periodic structures is formed directly onto the polymorphic surface of the chocolate, in particular on the polymorphic surface of chocolate the hardened chocolate forms the so-called beta crystal structure. Theabsence of any additives has the advantage that the taste of the food product, in particular the chocolate, is not modified.

A further advantageous food product according to the invention comprises a substrate wherein the substrate is built on a convex or concave supporting layer. Therefore, the substrate might be slightly convex or concave because it adapts to the supporting layer. Even though the substrate is slightly convex or concave, the array of periodic structures that is built on it diffracts an incident light beam into beam components of different wavelengths. This is because the periodic structures are so small that the slightly convex or concave underlaying layer does not affect the effect of the structures. Slightly concave or convex refers to a curvature κ (with κ = 1/radius) of the surface of κ ≤ 0.5 m⁻¹.

A further advantageous food product according to the invention has an additional second array of second periodic structures, wherein the second periodic structures are also adapted to diffract the incident light beam into beam components of different wavelength. The second array of periodic structures might comprise different periodic structures than the array. E.g., the first array has blaze grating structures that extend in a first direction and the second array has blaze grating structures that extend in a second direction, wherein there is an angle of 10° to 90° between the first and the second direction. In a further example, the array could comprise blaze grating structures and the second array could comprise triangles, pyramids, etc. This means, that in an advantageous embodiment, various sections of a surface can be built by arrays of periodic structures, wherein also the periodic structures can comprise various different structure elements. In a further advantageous embodiment, at least two sections with different periodic structures might be built next to each other. E.g. a first section of the surface is built by at least one array of a first periodic structure and a second section of the surface is built by at least one array of a second periodic structure, wherein the first and second periodic structures area adapted to diffract an incident light beam into beam components of different wavelengths. A second aspect of the invention refers to a method for manufacturing the food product according to the first aspect. The method comprises the step of tempering at least a layer of the surface material at temper temperatures Tₜ ≤ 50°C. In particular, at least a layer of the surface material means that the whole material might be tempered but als means that only a layer or a several layers of the material might be tempered. In addition, the method comprises the step of casting the melted surface material into a mold. In particular, if only a layer or several layers are tempered, the casting of the melted surface material also refers to only pressing the material against the mold. Furthermore, the method comprises the step of cooling the surface material down, in particular down to ambient temperature, while keeping it in an environment with a temperature of T_{c} ≤ 12°C, in particular during a time range of t ≤ 12 minutes. An additional step of the method is the demolding of the surface material from the mold after cooling, in particular after the surface material has reached ambient temperature.

An advantageous food product comprises chocolate. Tempering of chocolate refers to heating up the chocolate up to a temper temperature Tₜ, wherein Tₜ ≤ 60°C, in particular Tₜ ≤ 50°C. In particular, temper temperature Tₜ is above 30°C, very particularly above 35°C. Heated up to the temper temperature Tₜ, the chocolate melts and can be casted into a mold.

In particular, the tempering of chocolate refers to heating up the chocolate up to Tₜ ≤ 50°C, and subsequently cooling it down to T_{c} ≤ 30°C and heating it up again to Tₜ₂ ≥ 30°C. The effect of such tempering results in the chocolate building crystalline structures that diffract the incident light beam.

Advantageously, for a chocolate food product, a seed chocolate is brought into the melted chocolate in the mold. The seed serves as a starter for the crystallization of fatty acids of the cocoa butter comprised within the chocolate. Preferably at the same time, the periodic structures are imprinted into the chocolate food product by pressing the mold on the chocolate food product surface. By doing so, this has the effect that the periodic structures have a smooth surface and the reflective properties are enhanced.

Advantageously, the mold comprises a negative form of the array of periodic structures. Therefore, if the food product, in particular the chocolate, is casted into the mold, the array of the periodic structure is built on the surface of the food product.

The mold comprising the food product is cooled down to harden the food product in the respective form. In particular, the array of periodic structures should harden such that it is formed on the surface of the food product before the food product is removed from the mold.

Advantageously, the mold and/or the food product within the mold reach ambient temperature (e.g. 18-24°C) before the food product is removed from the mold.

Advantageously, the edges of the food product are free of periodic structures, such that the food product can be touched at its edges and therefore might be handled easily.

A third aspect of the invention refers to a mold for manufacturing the food product according to the first aspect. Advantageously, the mold is made of plastic material, metal, ceramic and/or glass.

It is understood that the various embodiments, preferences, and method steps as disclosed in the specification may be combined at will, if not otherwise specified or explicitly excluded. Other advantageous embodiments are listed in the dependent claims as well as in the description below.

### Brief Description of the Drawings

The invention will be better understood and objects other than those set forth above will become apparent from the following detailed description thereof. Such description refers to the annexed drawings, wherein:
Fig. 1 shows a schematic of a section of a surface 1 of a food product according to an embodiment of the invention;
Fig. 2a and 2b show cross sections of an array of periodic structures according to an embodiment of the invention;
Fig. 3 shows a further embodiment of the invention;
Fig. 3a and 3b show structures of the embodiment according to Fig. 3;
Fig. 4 shows a further embodiment of the invention;
Fig. 5a to 5d show schematically a sequence of a method for manufacturing of an embodiment of the invention;
Fig. 6a and 6b show a measurement of two embodiments of the invention: The free spectral range of each order of two embodiments of the invention versus the number of diffraction orders;
Fig. 7 shows a photo picture of an embodiment of the invention.

### Modes for Carrying Out the Invention

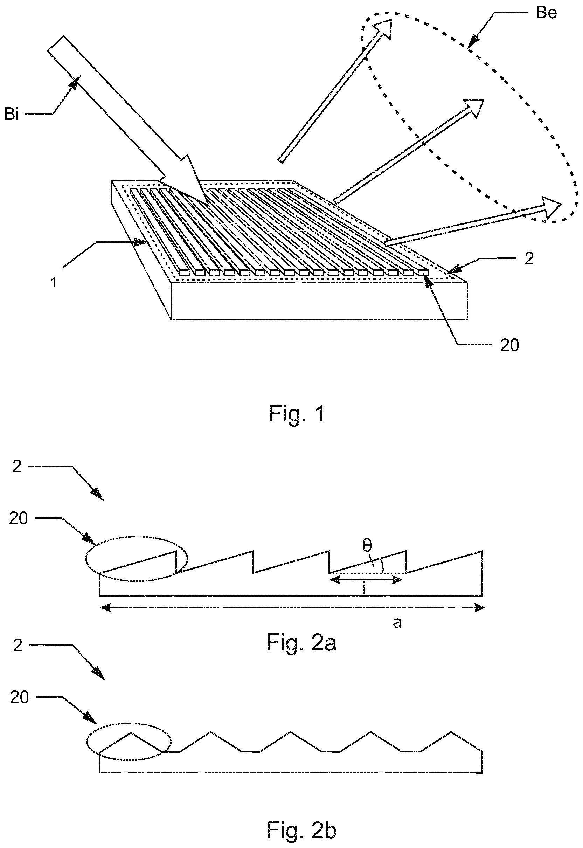

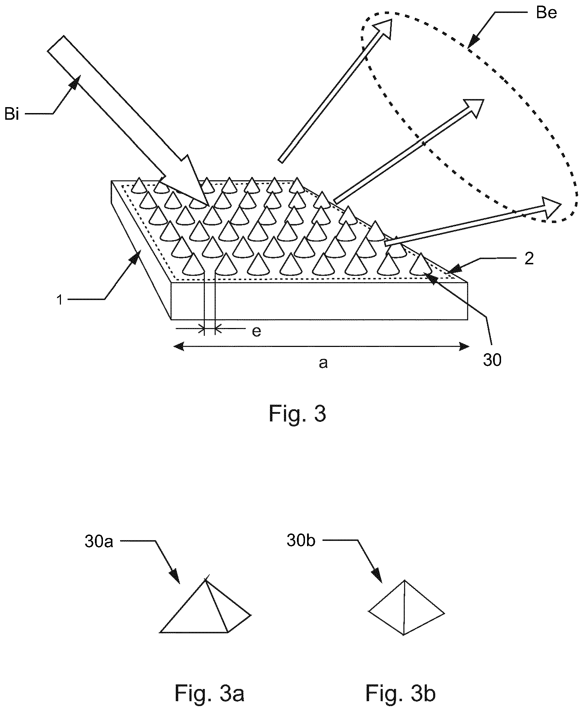

Fig. 1 and Fig. 3 show a schematic view of a food product or a section of a food product comprising a surface 1 and an array of periodic structures 2 that are arranged or built respectively on that surface 1.

Advantageously, the food product in Fig. 1 and Fig. 3 is a chocolate product.

The individual elements 20, 30 are arranged in a periodic structure 2. This means, that the distances between the respective individual elements 20, 30 of the structures repeat. Also, all elements 20, 30 of an array of a periodic structure have the same dimensions.

Advantageously, the surface material of the food products shown in the figures has a refractive index n of 1.2 ≤ n ≤ 1.6. In addition, advantageously, the surface material might have an essentially crystalline structure with crystals having a diameter of 0.1µm ≤ d ≤ 5µm.

In further advantageous embodiments not shown in the figures, the substrate might be built on a convex or concave supporting layer of the food product.

In the embodiment of Fig. 1 of the invention, each individual element 20 has essentially the form of a protruding line. The protruding lines in Fig. 1 are only representative for demonstrating a periodic structure. The form of the periodic structures are shown in Fig. 2a and 2b.

An edge of the substrate might be left unstructured, such that the food product can be easily handled.

The periodic structures in the array are adapted to diffract an incident light beam Bi into beam components Be of different wavelengths. In particular, the incident beam Bi is a daylight beam, in particular polychromatic light, shining onto the substrate surface. In addition, the incident beam Bi can also be artificial light from a lamp or can be an incident beam with a specific wavelength spectrum, in particular with a wavelength spectrum within the visible range of light (ca. 380-740 nm) .

The diffraction of the incident light beam Bi on the periodic structures 2 diffracts the light beam Bi into beam components Be of different wavelengths. Such diffraction of an incident e.g. white beam Bi results in beam components Be of different wavelengths affiliated with different colours. Therefore, the diffracted beams Be appear as colourful pattern for the human eye.

The diffraction of the incident light beam Be on the periodic structures leads to a separation of the incident beam into the beam components Be of different diffraction orders.

Fig. 2a and 2b show different embodiments of cross sections of the periodic structures to demonstrate how the lines that represent an embodiment of the periodic structures in Fig. 1 could be shaped. Advantageously, the periodic structures in Fig. 1 are shaped as grating pattern.

Fig. 2a shows a saw-tooth shaped cross-section of the period structures 2. In particular, the periodic structure 2 shown in Fig. 2a is a blaze grating, an advantageous embodiment of the periodic structure. The blaze grating is optimized to achieve a maximum grating efficiency. Advantageously, the blaze grating pattern is built to have a line spacing a with 150 ≤ grooves/mm ≤ 1200 and a blaze angle of 4 ≤ θ ≤ 37, in particular 8 ≤ θ ≤ 37, very particular 4 ≤ θ ≤ 10.

Fig. 2b shows a further cross section of an advantageous embodiment of the periodic structure. The periodic structure is a repetition of a triangle shape with a plateau in between the triangles.

In addition to the cross-sections shown in Fig. 2a and 2b, also further cross section of protruding lines are possible, such as essentially triangle-, pyramid-, tetragon-, polygon- or sinusoidal-shaped curves.

Fig. 3 shows a further advantageous embodiment of the food product. The array of periodic structures 2 is formed from elements 30 having the form of cones. The individual cones are arranged periodically, meaning with equal distances e from each other, such that the pattern repeats. The incident light beam Bi diffracts at the cone patterned surface into light beams Be with different wavelength.

Fig. 3a and 3b show further advantageous elements 30a and 30b of embodiments of the periodic structure shown in Fig. 3. The cones in Fig. 3 could be exchanged with the elements 30a, 30b shown in Fig. 3a and 3b to build further advantageous embodiments with the same technical effect that the incident light beam Bi is diffracted into light beams with different wavelengths Be.

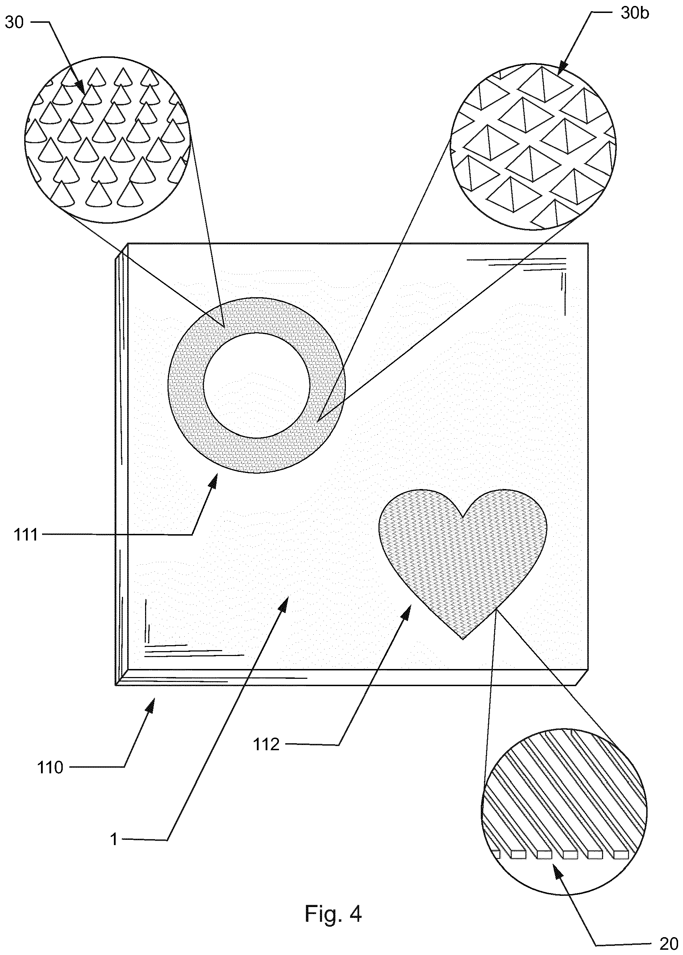

Fig. 4 shows a further embodiment of the invention comprising a food product 110 with a surface 1, wherein a first section 110 of the surface 1 is built by a first array of periodic structures 30 that have the form of cones and by a second array of periodic structures 30b that have the form of pyramids. In addition, there might be a further section 112 on the same surface that is built by an array of periodic structures formed as protruding lines 20. This example demonstrates that various sections of a surface 1 can be built by arrays of periodic structures, wherein also the periodic structures can comprise various different structure elements. In a further example, not shown in the Figure, also the further section 112 might be built by sub-sections of protruding lines directed in various direction to gain different optical effects.

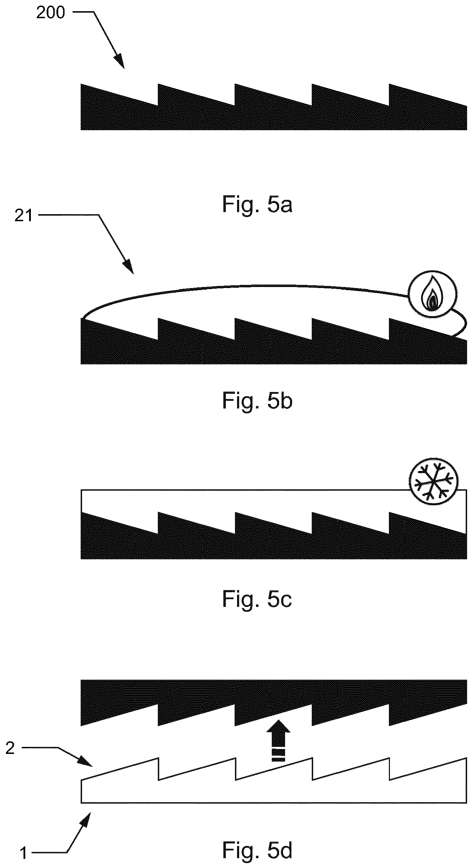

Fig. 5 shows schematically the steps of an advantageous method for manufacturing the food product, in particular for manufacturing a chocolate food product. An advantageous surface material has a melting temperature of T ≤ 50°C. Advantageously, the food product is processed without any additives on the surface.

Fig. 5a shows an example for a mold 200 for fabricating the array of periodic structures as shown in Fig. 1 with the cross section of Fig. 2a.

Advantageously, the surface material or material respectively, is first tempered towards a temperature Tₜ ≤ 50°C, such that it melts and can secondly be casted into the mold 200 as shown in Fig. 5b. The material is cooled down, to harden the material respectively the surface material again, such that the array of the periodic structure is patterned onto the surface. The cooling is done by keeping the mold 200 with the material at a temperature of Tc ≤ 12°C, in particular during a time range of t ≤ 12 minutes, as shown in Fig. 5c. Finally, the mold is removed and the resulting food product is uncovered, comprising a surface 1 with an array of periodic structures 2 as exemplary shown in Fig. 1 or Fig. 3.

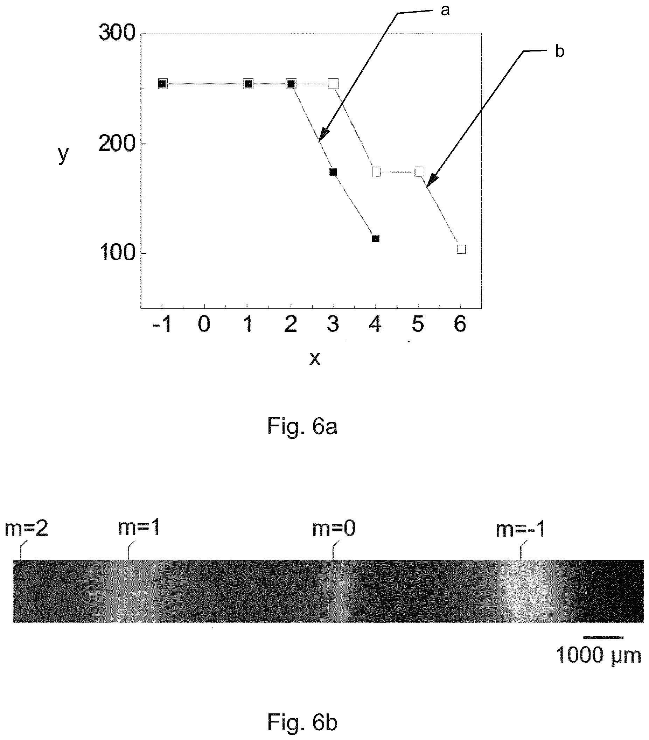

**Example 1:** Micrograph measurement of two embodiments of the invention. Both embodiments are food products made of chocolate, comprising dark chocolate with cocoa mass 13 wt%, cocoa butter 39wt%, and sugar content of 48wt%.
The measurement setup consists of a collimated white light source and a rotatable digital microscope with variable magnification (KEYENCE CORPORATION).
The x-axis of the measurement graph shows the resolved diffraction orders. The y-axis of the measurement shows the free spectral range in nm.
Curve a shows a measurement of the first embodiment of the invention. The food product of the embodiment of the first invention comprises a section of the surface that is built by an array of periodic structures that form a rectangular grating pattern (2mm x 2mm). A rectangular grating pattern refers to protruding line structures with a rectangular cross section, as shown in Fig. 1. The periodic structures have the dimensions of 200 grooves/mm with a height of 1 to 6 µm.
Curve b shows a measurement of the second embodiment of the invention. The food product of the embodiment of the second invention comprises a section of the surface that is built by an array of periodic structures that form a blaze grating pattern. Fig. 6b shows a photo picture of the second embodiment of the invention comprising the blaze grating pattern. The periodic structures have the dimensions of 300 grooves/mm and a blaze angle which is 4°18'. The section has has the dimensions of 5mm x 5mm.
As can be seen in the micrograph measurement curve of Fig. 6a, the blazed grating pattern (curve b) resolves higher diffraction orders than the rectangular pattern (curve a) for the same food product.
A further measurement not shown in this curve reveals that the same effect can be demonstrated also by an embodiment of the invention with a blaze grating with the dimensions of 600 grooves/mm and a blaze angle of 8°37'.

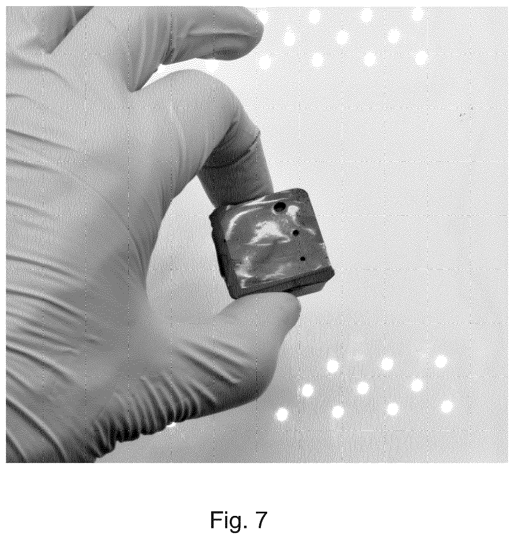

**Example 2:** Photo picture of an embodiment of the invention shown in Fig. 7. The embodiment is a food product made of dark chocolate with cocoa mass 13wt%, cocoa butter 39wt% and sugar content 48wt%.
The food product comprises a surface wherein an array of periodic structures is built. The structure is a blaze grating pattern. Therefore, the incident day light beam is diffracted into beam components of different wavelengths. This diffraction results in a coloured surface of the food product. The dimensions of the patterned section is 2.5 x 2.5 cm, the periodic structures are 300 grooves/mm, and the blaze angle 4° 18'.

While there are shown and described presently preferred embodiments of the invention, it is to be distinctly understood that the invention is not limited thereto but may be otherwise variously embodied and practised within the scope of the following claims.

## Claims

1. Food product comprising a surface (1) wherein at least a section of the surface (1) is built by at least one array of periodic structures (2) that are adapted to diffract an incident light beam into beam components of different wavelengths.

2. Food product according to claim 1 selected from the group consisting of a chocolate bar, a chocolate layer, and a chocolate coating.

3. Food product according to claim 1 or 2, wherein the array of periodic structures (2) is built as a grating pattern.

4. Food product according to claim 3, wherein the grating pattern is a blaze grating pattern.

5. Food product according to claim 4, wherein individual grating elements of the blaze grating have a line spacing with 150 ≤ grooves/mm ≤ 1200 and a blaze angle 4 ≤ θ ≤ 37, in particular 8 ≤ θ ≤ 37, very particular 4 ≤ θ ≤ 10.

6. Food product according to one of claims 3 to 5, wherein the grating pattern comprises grating lines, wherein the cross-sections of the grating lines have the shape of triangles, pyramids, saw teeth, tetragons, polygons or sinusoidal curves.

7. Food product according to claim 1 or 2, wherein the array of periodic structures is formed from elements having the form of cones, pyramids and/or tetragons.

8. Food product according to one of the preceding claims, wherein the surface material has a refractive index n of 1.0 ≤ n ≤ 2.0, in particular of 1.2 ≤ n ≤ 1.6.

9. Food product according to one of the preceding claims, wherein the surface material has an essentially crystalline structure with crystals having a diameter d of 0.1µm ≤ d ≤ 5µm.

10. Food product according to one of the preceding claims, wherein the surface material has a melting temperature of T ≤ 50°C.

11. Food product according to one of the preceding claims, without any additives on the surface.

12. Food product according to one of the preceding claims, wherein the substrate is built on a convex or concave supporting layer of the food product.

13. Food product according to claims 1 to 12, wherein the section of the surface is built by the array of periodic structures and a second array of second periodic structures, wherein the second periodic structures are adapted to diffract the incident light beam into beam components of different wavelength.

14. Method for manufacturing a food product comprising a surface **characterized in that** at least a part of the surface is built into an array of periodic structures (2) that are adapted to diffract an incident light beam into beam components of different wavelengths, comprising the steps of:
- tempering in particular at least a layer of the surface material at a temperature Tₜ ≤ 50°C,
- casting the tempered surface material into a mold,
- cooling the surface material down, in particular down to ambient temperature, while keeping it in an environment with a temperature of T_{c} ≤ 12°C, in particular during a time range of t ≤ 12 minutes,
- demolding the surface material after cooling, in particular after the surface material has reached ambient temperature.

15. Mold for manufacturing the food product according to claims 1 to 11.
